# EUROPEAN PATENT APPLICATION

(11) **EP 1 818 290 A1**
(43) Date of publication of application: **15.08.2007**
(21) Application number: 07002602.6
(22) Date of filing: 07.02.2007
(51) Int. Cl.: B65G 17/44, B65G 17/06

(54) **Metal chain link for chain conveyor with perfected structure**

(30) Priority: 10.02.2006 IT MI20060050
(71) Applicant: REGINA SUD S.p.A., I-04010 Borgo S. Michele (Latina) (IT)
(72) Inventor: Garbagnati, Carlo, 23884 Castello Brianza LC (IT); Cattaneo, Norberto, 20040 Usmate-Velate Mi (IT)
(74) Representative: Faraggiana, Vittorio

(57) **Abstract**

A metal chain link designed to form a chain conveyor includes a pair of parallel plates (12a) connected by a pair of articulated joint cross pins (12b) with adjacent links of the chain and said plates being overlain by a cover (14) forming the carrying surface of the link designed to snap-engage on opposite ends of the pins (12b) projecting laterally with respect to said link plates with the cover (14) including first generically U-shaped metal part (17) designed to embrace said plates (12a) and bearing holes (24) for snap coupling with the ends of said pins (12b) on opposite sides of the link and a second generically U-shaped metal part (16) overlying the first to define lateral link guide surfaces and an upper plate (15) overlying the two U-shaped parts (16, 17) to form the carrying surface of the link. Said upper plate (15) is provided with a cavity (29) on the lower side to receive upper parts of the U-shaped parts (16, 17) overlying the chain plates (12a).

## Description

This invention relates to an innovative metal chain link to be used for forming chain conveyors.

Using metal chains made with links including pairs of facing plates connected through pins acting as articulated joint parts with consecutive chain links has been known for some time in the field of industrial conveyors.

A cover forming the carrying surface of the chain is then applied to this known type of link.

The cover is typically made up of a generally U-shaped plastic part engaged by snapping onto the link at the ends of the jointing pins between the links.

It has been required recently to realize the cover of metallic material so as to have a more resistant mechanical and chemical structure.

For this reason solutions aimed at replacing the molded plastic part with metal parts have been proposed but the chains realized showed numerous defects.

For example, a chain covering structure consisting of a U-shaped metal part designed to stay over the basic chain link to which a metal plate is applied above to form the carrying surface has been proposed. Between the side legs of the U-shaped part and the link plates are inserted plastic shims on which the U-shaped part is engaged with a snap. The plate forming the conveyor surface is riveted to the U-shaped part.

This structure proved to be scarcely reliable given the great ease with which the basic link-covering part came unhooked.

In addition, as a result of the fastening with rivets, the top carrying surface is not smooth.

The presence of plastic parts makes the product less resistant at the chemical level.

The side legs of the U-shaped part have a passing hole for snap engagement on the plastic shim and thus do not have smooth external surfaces for contact with the conveyor guides.

This solution was therefore considered unsatisfactory.

Other types of links were known also including a metal cover formed with two U-shaped parts to be superimposed on the base link and a plate forming the carrying surface fastened at the top to the two U-shaped parts.

This structure however involves considerable encumbrance due to the thickness of the various parts formed with constant-thickness metal sheets so much so that it was impossible to obtain a product capable of replacing the chains with plastic cover and satisfying the same dimensional specifications. In particular, these covers were excessively cumbersome for the distance between the articulated chain jointing pin and the carrying surface.

The general purpose of the present invention is to remedy the above mentioned shortcomings by making available a metal chain link capable of being perfectly interchangeable with the known chains provided with covers with plastic carrying surface.

Another purpose of this invention is to make available a link simple in structure and economical to manufacture.

Another purpose of this invention is to make available a link resistant both at the mechanical level and at the chemical level.

Another purpose of this invention is to make available a link having smooth surfaces for carrying and contact with the conveyor guides.

In view of this purpose it was sought to provide in accordance with the present invention a metal chain link designed to form a chain conveyor including a pair of parallel plates connected by a pair of articulated joint cross pins with adjacent links of the chain and said plates being overlain by a cover forming the carrying surface of the link designed to snap-engage on opposite ends of the pins projecting laterally from said link plates with the cover including a first generically U-shaped metal part designed to embrace said plates and bearing holes for a snap coupling with the ends of said pins on opposite sides of the link and a second generically U-shaped metal part overlying the first to define lateral guide surfaces of the link and an upper plate overlying the two U-shaped parts to form the carrying surface of the link and characterized in that said upper plate is provided with a cavity on the lower side to receive upper parts of the U-shaped parts overlying the chain plates.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a perspective view of part of a chain conveyor formed with metal links in accordance with this invention,
FIG 2 shows a perspective view of two U-shaped parts forming part of the cover of the chain base-link,
FIG 3 shows a cross-section view of the chain link of the above figures, and
FIG 4 shows a cross-section view similar to that of FIG 3 showing an alternative realization of this invention.

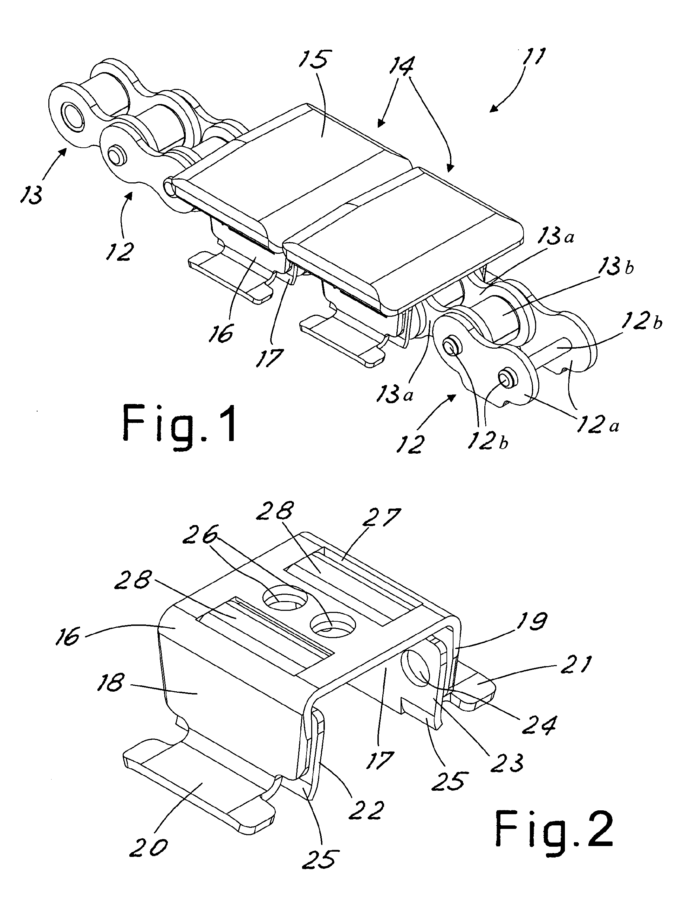

With reference to the figures, FIG 1 shows part of a chain conveyor 11 including a metal base chain formed from a sequence of links 12, 13 to which are applied covers 14 designed to form the chain carrying surface.

The figure shows only two covers 14 which must by understood as applied along the entire conveyance chain.

The links 12, which bear the covers 14, are formed with two plates 12a connected together by means of pins 12b which act as articulated joint part with the adjacent links of the chain.

Between two adjacent links 12 there is arranged a link 13 formed with two plates 13a hinged on two adjacent pins 12b and between which are placed rollers 13b. The metal base chain 12-13 is realized in accordance with a well known technique of the field and therefore will not be further described.

The cover 14 is formed with a first generically U-shaped part 17 which stands above and embraces a link 13 of the chain and a second generically U-shaped part 16 which in turn stands above the first part 17 and an upper plate 15 designed to form the carrying surface of the chain.

FIG 2 shows the two U-shaped elements 16 and 17 with the upper plate 15 removed.

The first U-shaped part 17 bears four holes 24 opposite its legs 22, 23 (in the view of FIG 2 only one hole 24 is visible) which are designed to receive in snap engagement the ends of the two articulated joint pins 12b which project from the plates 12a of the link 12.

To facilitate snap engagement applying the cover from above on the link 12, below the holes 24 there are made portions curved outward 25 against which rub the heads of the pins during engagement making the U-shaped legs bend.

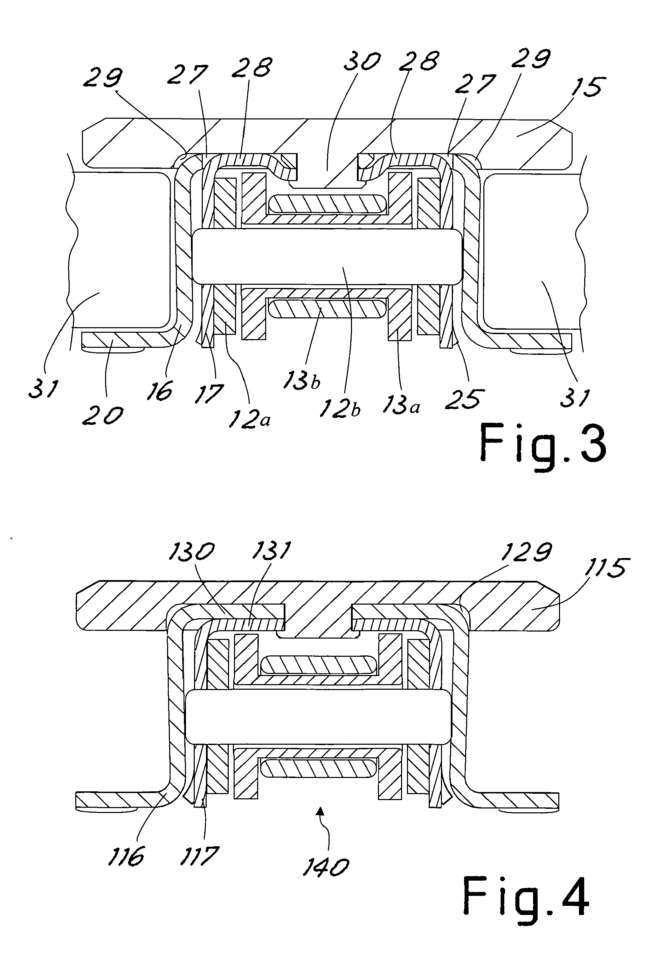

The second U-shaped part 16 is provided with a pair of side walls 18, 19 which cooperate with the guides 31 (shown in FIG 3) to lead the chain and a pair of horizontal tongues 20, 21 which act as guide parts at the curved points of the path.

The wall surfaces 18, 19 are smooth and also present beveled edges at the front and rear ends of the link so as to reduce to a minimum the wear of the conveyor guide.

The upper plate 15 presents a cavity 29 suited to housing the upper parts of the U-shaped parts 16, 17 arranged in use above the base chain 12-13.

This stratagem allows realization of a metal cover interchangeable with the known plastic chain covers to satisfy all the dimensional specifications peculiar to the plastic chain.

In particular it is necessary that the distance between the axis of the articulated joint pin 12b and the transportation plane have a certain size too small to be obtained with known metal links with double U-shaped part and overlying metal plate.

The specification is satisfied thanks to the presence of the cavity 29 which, housing the upper parts of the U-shaped parts overlying the link 13, allows reducing the vertical space occupied by the cover and thus satisfies the specifications without creating interferences with the adjacent chain links.

The cavity 29 has a depth such that the shims of the two U-shaped parts do not project beyond it in the zone overlying the plates 12a, 13a of the base chain.

Advantageously the three parts of the cover (plate 15, U-shaped parts 16, 17) are rigidly constrained together by means of the projecting part 30 which projects from the plate 15 downward and engages in corresponding aligned holes 26 made in the two U-shaped parts 16, 17 (the holes are quite visible in FIG 2).

The projection 30 stretches out from the plate 15 opposite the cavity 29.

The fastening between the cover parts through the part 30 is ensured with riveting.

Advantageously the plate 15 can be obtained by sintering or even cold or hot molding.

The projections 30 are advantageously realized in a piece with the plate 15. However they can also be brought back in the form of separate pins, for example riveted at both ends or even applied differently to the plate 15 to interconnect it with the U-shaped parts by riveting of the ends which traverse the latter.

The U-shaped parts 16, 17 are formed of metal sheet for example with thickness of approximately 1 mm or even 0.8 mm in case of the inner part.

In accordance with one realization of this invention the U-shaped part 16 is realized with two longitudinal holes 27 designed to receive convex portions 28 formed in the underlying part 17. In the space between the two holes 27 the holes 26 are made for engagement with the plate 15.

The projection 30 remains thus arranged in the space above the roller 13b.

This particular configuration of the two U-shaped parts allows reducing to a minimum their space occupied at the plates 12a and 13a of the chain links. This way, it is possible to form the cavity 29 of the plate 15 as shallow as possible since the most critical point as regards the vertical space occupied of the cover 14 is located just at the height of the base chain plate.

This facilitates manufacture of the plate 15, for example in case of sintering, increasing its minimum thickness.

The cavity 29 can be approximately as deep as the thickness of the U-shaped part 16.

Advantageously the ends of the pins contact the internal surface of the U of the second part 16.

In accordance with an alternative realization of this invention shown in FIG 4 the upper portions 130 and 131 of the two U-shaped parts 116, 117 of the cover (similar to the parts 16, 17 of the realization described above) plains and continuums are formed. In this case, it is necessary to form a cavity 129 on the lower face of the plate 115 (similar to the plate 15 of the previous realization) deeper so as to ensure interchangeability with the known chains having a plastic cover and avoiding interferences with the base chain links 140. In this case the depth of the cavity will be equal to approximately the sum of the thicknesses of the two U-shaped parts.

It is now clear that the preset purposes have been achieved.

A metal carrying chain has been made available provided with a metal cover perfectly interchangeable with the covers of the plastic base chains.

The metal cover allows satisfying all the dimensional specifications peculiar to those made of plastic and ensures a solid snap coupling on the chain.

In addition, the surfaces in contact with the conveyor guides are quite smooth and reduce wear of the conveyor components. The cover is realized in few pieces with a structure simple and economical to realize.

The carrying surface is smooth and has no traces due to rivets as happened with the prior art links.

In addition, there not being any plastic part, the chain is more resistant even from a chemical viewpoint.

Naturally the above description of an embodiment applying the innovative principles of the present invention is given by way of non-limiting example of said principles within the scope of the exclusive right claimed here.

## Claims

1. Metal chain link designed to form a chain conveyor and including a pair of parallel plates (12a) connected by a pair of articulated joint cross pins (12b) with adjacent links of the chain and said plates being overlain by a cover (14) forming the carrying surface of the link designed to snap-engage on opposite ends of the pins (12b) projecting laterally with respect to said link plates with the cover (14) including a first generically U-shaped metal part (17) designed to embrace said plates (12a) and bearing holes (24) for a snap coupling with the ends of said pins (12b) on opposite sides of the link and a second generically U- shaped part (16) overlying the first to define lateral guide surfaces of the link and an upper plate (15) overlying the two U-shaped parts (16, 17) to form the carrying surface of the link and **characterized in that** said upper plate (15) is provided with a cavity (29) on the lower side to receive upper parts of the U-shaped parts (16, 17) overlying the chain plates (12a).

2. Chain link in accordance with claim 1 **characterized in that** said 1^{st} and 2^{nd} U-shaped parts (26) have aligned holes designed to receive in engagement a corresponding projection (30) of the upper plate (15) to fasten together said three parts of the cover (14).

3. Chain link in accordance with claim 1 **characterized in that** the upper plate (15) is formed by sintering.

4. Chain link in accordance with claim 1 **characterized in that** the upper plate (15) is formed by deformation and in particular hot molding.

5. Chain link in accordance with claim 1 **characterized in that** opposite the two lower ends of the second U-shaped part (16) on opposite sides of the link there stretch out a pair of guiding side tongues (20, 21) nearly parallel to the carrying surface.

6. Chain link in accordance with claim 1 **characterized in that** the ends of the articulated joint pins (12b) contact the second U-shaped part (16).

7. Chain link in accordance with claim 1 **characterized in that** the second U-shaped part (16) includes two longitudinal openings (27) in its upper part designed to receive corresponding convex portions (28) of the first U-shaped part (17) overlying said plates of the conveyor link.

8. Chain link in accordance with claims 2 and 7 **characterized in that** the holes (26) in the first and second U-shaped parts designed to receive the fastening projection (30) of the upper plate (15) are arranged between said two longitudinal openings (27).

9. Chain link in accordance with claim 1 **characterized in that** said two U-shaped parts (16, 17) are formed with a thin metal sheet with constant thickness.

10. Chain link in accordance with claim 1 **characterized in that** over the plates (12a) of the link the U-shaped parts (16, 17) do not project beyond the cavity (29) in the plate (15).

11. Chain conveyor including links in accordance with one of the above claims.

12. Metal chain-link cover for of the type formed with a pair of parallel plates (12a) connected by a pair of articulated joint cross pins (12b) with adjacent links of the chain with the cover (14) being designed to overly the link to form the carrying surface of the chain and with the cover including a first generically U-shaped metal part (17) designed to embrace said plates and bearing holes (24) for a snap coupling with the ends of said pins (12b) projecting from the plate on opposite sides of the link and a second generically U-shaped metal part (16) overlying the first to define lateral guide surfaces of the link and an upper plate (15) overlying the two U-shaped parts to form the carrying surface of the link and **characterized in that** said upper plate (15) is provided with a cavity (29) on the lower side to receive upper parts of the U-shaped parts (16, 17) overlying the chain plates.
